# DEMANDE DE BREVET EUROPEEN

(11) **EP 1 107 236 A1**
(43) Date de publication de la demande: **13.06.2001**
(21) Numéro de dépôt: 00420247.9
(22) Date de dépôt: 30.11.2000
(51) Int. Cl.: G11B 5/39

(54) **Tête de lecture planaire à élément magnéto-résistif**

(30) Priorité: 01.12.1999 FR 9915133
(71) Demandeur: Planhead-Silmag Phs, 75008 Paris (FR)
(72) Inventeur: Saporito, Emmanuel, 38160 Chatte (FR); Nozieres, Jean-Paul, 38700 Corenc (FR); Girard, Olivier, 38120 Saint Egreve (FR)
(74) Mandataire: Palix, Stéphane

(57) **Abrégé**

Tête de lecture magnétique (1), destinée à lire des informations enregistrées sur d'un support d'informations (7) qui est déplacé dans un plan de vol au-dessus ou dessous de la tête, ladite tête comportant :
◆ une couche de protection (15) apte à protéger la tête contre l'usure liée aux frottements avec le support d'informations (7),
◆ deux éléments magnéto-résistifs (10, 12) en forme de ruban ,disposés côte à côte sans contact, parallèlement au plan de vol et en dessous de la couche de protection (15); les deux éléments magnéto-résistifs (10, 12) étant magnétiquement orientés dans le même sens, parallèlement au plan de vol;
et dans laquelle deux des extrémités des éléments magnéto-résistifs (10, 12) sont électriquement reliés pour former une borne de mesure commune (42), les autres extrémités desdits éléments magnéto-résistifs (10, 12) formant chacune une borne de mesure supplémentaire (43, 44), permettant la mesure différentielle des signaux relatifs à chacun des éléments magnétos-résistifs (10, 12).
caractérisée en ce qu'elle comporte également un écran magnétique de canalisation (17), adjacent aux éléments magnétorésistifs (10,12) et situé dans le même plan horizontal que ces derniers, ledit écran présentant une ouverture à l'intérieur de laquelle sont logés les éléments magnétorésistifs (10,12), ledit écran étant isolé électriquement des éléments magnétorésistifs (10,12).

## Description

### Domaine Technique

L'invention se rattache au domaine des têtes de lecture/écriture permettant le stockage d'informations sous forme magnétique sur un support tel que disque dur, disque souple ou bande magnétique, notamment utilisés dans les matériels informatiques.

Elle concerne plus précisément une tête de lecture comportant un élément sensible ou capteur, constitué d'éléments magnéto-résistifs.

### Techniques antérieures

De façon connue, les têtes magnétiques utilisées dans les matériels informatiques tels que disque dur ou équivalent, comportent une partie destinée à assurer l'écriture d'informations sur le support et une partie destinée à assurer la lecture des informations enregistrées sur le support.

La présente invention concerne plus spécifiquement la partie lecture d'une telle tête magnétique.

De façon connue, l'écriture sur un support d'informations magnétique résulte en la création d'une succession de domaines magnétiques (bits en anglais) séparés par des transitions magnétiques, lesquelles sont détectées par la tête de lecture .

De façon connue, la détection des transitions magnétiques peut être réalisée par des capteurs du type magnéto-résistifs dans lesquels le flux magnétique issu des transitions induit une variation de la résistance électrique du capteur.

La variation de la résistance électrique est par exemple quantifiée par une mesure de tension sous alimentation en courant constant.

Plusieurs géométries ont déjà été proposées pour la disposition des éléments magnéto-résistifs à l'intérieur d'une tête de lecture. Ainsi, dans la géométrie la plus courante des têtes de lecture appelées « têtes verticales », les éléments magnéto-résistifs sont disposés perpendiculairement au support d'informations.

Dans cette géométrie "verticale", l'élément magnéto-résistif est généralement inséré entre deux écrans magnétiques formant blindage, dont la fonction est d'écranter les informations "parasites" qui ne font pas partie du signal à détecter. Ces informations "parasites" sont principalement constituées par les transitions voisines sur le support d'enregistrement et du bruit extérieur. Une fraction importante du flux magnétique issu des transitions à lire est captée par ces écrans.

Pour qu'ils assurent leur fonction d'écrantage en isolant les transitions individuellement, les éléments magnétiques de blindage doivent être d'autant plus proches l'un de l'autre que la densité d'informations sur le support est importante.

En conséquence, les pertes de flux occasionnées par la présence de ces blindages augmentent avec la densité d'informations, ce qui réduit d'autant l'efficacité de la tête de lecture.

En outre, la proximité des écrans magnétiques, généralement reliés à la masse électrique, et de l'élément magnéto-résistif dans lequel circule un courant électrique induit des risques de claquage électrique de l'isolant interposé entre l'élément magnéto-résistif et les écrans magnétiques, et ce d'autant plus que la densité d'informations augmente et que l'épaisseur d'isolant diminue.

En outre, si la tête vient à toucher la surface du support d'enregistrement, une élévation de température se produit, qui induit une variation accidentelle de la résistance de l'élément magnéto-résistif, indépendemment de l'existence ou non d'une transition magnétique, et donc la génération d'une erreur dans le signal : un tel phénomène est connu sous le nom d"'aspérité thermique".

Enfin, la fabrication des têtes verticales présente une difficulté technologique importante liée l'étape de polissage nécessaire pour amener la tête aux dimensions requises (en particulier la hauteur de l'élément magnétorésistif) avec un état de surface satisfaisant. En plus du contrôle dimensionnel, cette opération de polissage peut induire des défauts dans l'élément magnétorésistif, de nature chimique (corrosion) ou mécanique (mélange des différentes couches magnétiques, smearing en anglais).

Autrement dit, à partir d'une certaine densité d'informations, et compte tenu des distances nécessaires pour assurer une bonne isolation électrique entre les écrans et l'élément magnéto-résistif, il devient impossible d'optimiser une tête magnéto-résistive verticale, surtout en ce qui concerne la géométrie de l'élément magnéto-résistif

Un des objets de la présente invention est de supprimer l'étape complexe et coûteuse de polissage et de s'affranchir des limitations associées à l'existence d'écrans magnétiques (perte d'efficacité, risques de claquage électriques).

On a proposé dans les brevets US 3 860 965 et US 5 193 038, pour s'affranchir de la présence de deux écrans magnétiques, d'équiper des têtes de lecture verticales de deux éléments magnéto-résistifs, disposés en parallèle, et séparés par une mince couche isolante. Ces deux éléments sont positionnés perpendiculairement à la surface du support d'enregistrement, et connectés électriquement de telle sorte que l'on mesure la différence des signaux de sortie individuels de chaque élément.

Les aimantations des deux couches magnétiques sont orientées dans des directions différentes de façon à obtenir un signal de sortie seulement lorsqu'une composante verticale du champ magnétique issu du support d'enregistrement est centrée entre les deux éléments. Cette géométrie particulière restreint cette technologie à l'utilisation d'éléments magnétorésistifs formés d'une couche magnétique simple (dits éléments à magnétorésistance anisotrope connus sous l'abréviation AMR) dont les performances en termes de densité sont limitées. En conséquence, cette technologie est peu répandue.

Par ailleurs, on connaît une autre catégorie de têtes de lecture appelées « têtes planaires » dans lesquelles les éléments magnéto-résistifs sont disposés parallèlement à la surface du support d'informations.

Nous nous limiterons ici aux têtes qui doivent générer des signaux électriques de même forme que ceux générés par les têtes verticales, pour pouvoir utiliser ces têtes avec des circuits électroniques de traitement du signal identiques.

Le document FR 2 769 399 décrit un exemple d'une telle tête planaire. Dans sa partie lecture, une telle tête comprend essentiellement deux éléments magnéto-résistifs planaires (c'est-à-dire parallèles à la surface du support), associés à une pièce magnétique de canalisation verticale (c'est-à-dire perpendiculaire à la surface du support), de forte perméabilité magnétique, appelée "sonde".

Cette sonde détecte les transitions magnétiques sur le support d'informations et les transmet aux éléments magnéto-résistifs qui lui sont en regard.

La géométrie de cette pièce magnétique sonde est telle que le signal électrique généré par les éléments magnétorésistifs est identique à celui des têtes verticales.

Les inconvénients de cette géométrie proviennent :
- de la difficulté de fabriquer la pièce magnétique de canalisation qui, pour assurer correctement sa fonction de canalisation, doit être déposée sous forme d'un feuillet vertical.
- des risques d'apparition de bruits, appelés "bruits de domaine" inhérents à l'utilisation des circuits magnétiques de guidage du flux.
- des pertes de flux entre les différents éléments magnétiques constituant le circuit de guidage du flux et l'écran magnétique, conduisant à des champs excitateurs de l'élément magnéto-résistif relativement faibles, donc des signaux de sortie faibles.
- de la nécessité, pour obtenir un signal de sortie non nul lorsque la transition est centrée entre les deux éléments magnétorésistifs, d'orienter l'aimantation de certaines couches magnétiques dans des directions différentes.

Une alternative à cette dernière limitation peut être réalisée en utilisant un seul élément magnétorésistif, mais le signal de sortie est alors fortement diminué.

La présente invention permet de s'affranchir totalement de ces problèmes en supprimant la couche sonde et les pièces du circuit magnétique de guidage du flux.

Une approche alternative sans élément sonde a été proposée dans les documents IEEE Transaction on Magnetics vol.25, n°5, p.3689 (1989) et Journal of Applied Physics 69(8), p.5408 (1991). Dans ce cas, deux éléments magnétorésistifs sont déposés parallèlement au support d'enregistrement et sont connectés électriquement de façon à effectuer la différence électrique des signaux individuels de chaque élément. Dans les documents précités, un écran magnétique est disposé entre les éléments magnéto-résistifs et le support d'information. Cet écran comporte une ouverture centrée sur l'intervalle entre les deux éléments magnéto-résistifs, de manière à ce que seul le flux magnétique traversant cette ouverture soit actif. La largeur de cette ouverture définit la résolution en densité de la lecture. La présence de cet écran se traduit cependant par une diminution importante de l'amplitude du signal de sortie, en raison de l'augmentation de la distance entre le support et les éléments magnétorésistifs et des pertes de flux dans l'écran.

A l'inverse, dans le brevet US 5 155 643, la tête ne comporte pas d'écrans magnétiques et l'amplitude du signal de sortie est plus importante. Cependant, on observe l'apparition d'importantes contributions négatives, c'est-à-dire de signe opposé au pic principal, dans le signal de sortie de la tête. De telles contributions, appelées "undershoot" en anglais, peuvent être à l'origine de signaux d'erreur dans la chaîne électronique de détection.

Un problème que se propose de résoudre l'invention est celui d'obtenir une amplitude de sortie élevée, tout en éliminant ces contributions négatives parasites.

### Exposé de l'invention

L'invention concerne donc une tête de lecture magnétique magnétorésistive planaire, destinée à lire des informations enregistrées sur un support d'informations qui est déplacé dans un plan de vol au-dessus ou au-dessous de la tête.

Une telle tête comporte :
◆ une couche de protection apte à protéger la tête contre l'usure liée aux frottements avec le support d'informations,
◆ deux éléments magnéto-résistifs en forme de ruban, disposés côte à côte sans contact, parallèlement au plan de vol et en dessous de la couche de protection, les deux éléments magnéto-résistifs étant magnétiquement orientés dans le même sens, parallèlement au plan de vol.
A l'intérieur de cette tête, deux des extrémités des éléments magnéto-résistifs sont électriquement reliés pour former une borne de mesure commune, les autres extrémités desdits éléments magnéto-résistifs formant chacune une borne de mesure supplémentaire, permettant la mesure différentielle des signaux relatifs à chacun des éléments magnétos-résistifs.

Cette tête se caractérise en ce qu'elle comporte un écran magnétique de canalisation adjacent aux élements magnétorésistifs et situé dans le même plan que ces derniers. Cet écran est isolé électriquement des éléments magnéto-résistifs

Comme les deux éléments magnéto-résistifs présentent la même orientation magnétique, parallèlement au plan de vol, leur mode de réalisation est donc simplifié, et notamment par rapport à la disposition illustrée dans le brevet précité FR 2 769 399.

Les deux éléments magnétorésistifs présentent donc la même réponse pour un même champ magnétique excitateur et une réponse égale en amplitude mais opposée en signe pour un champ magnétique d'excitation identique en amplitude mais opposé en signe.

Ainsi, lorsqu'une transition se trouve centrée entre les deux éléments magnéto-résistifs, le flux magnétique qu'elle engendre se trouve également réparti entre les deux éléments magnéto-résistifs, avec un signe opposé dans les deux éléments magnéto-résistifs. La variation de résistance des deux éléments magnéto-résistifs est donc de même amplitude, mais de signe opposé d'un élément à l'autre.

Le montage électrique conforme à l'invention permet de mesurer la différence des deux signaux électriques présents aux bornes des éléments magnéto-résistifs, cette différence correspondant donc dans le cas où la transition est centrée entre les deux éléments magnétorésistifs, à la somme des valeurs absolues des deux signaux.

Ainsi, l'amplitude du signal image du champ magnétique détecté, est le double de celle mesurée avec un élément magnéto-résistif unique.

De plus, lorsqu'un champ magnétique, qu'il soit issu du support d'enregistrement ou qu'il soit parasite, est éloigné du centre des deux éléments, les signaux électriques issus des deux éléments magnéto-résistifs sont identiques, puisque le champ magnétique qui les parcourt est dans le même sens, et leur différence réalisée par le montage caractéristique induit un signal nul.

Autrement dit, on obtient une détection localisée de la succession d'informations issues du support d'enregistrement sans interposition d'écran magnétique entre les éléments magnéto-résistifs et le support d'informations. On conçoit que l'absence d'écran magnétique sur les éléments magnétorésistifs procure un avantage substantiel pour la réalisation de la tête et l'amplitude du signal délivré puisque la distance entre les éléments magnétorésistifs et le support d'information est réduite.

Conformément à une caractéristique de l'invention, les écrans magnétiques sont adjacents aux éléments magnétorésistifs, dans le même plan horizontal et isolés électriquement. Ils peuvent être formés d'un matériau magnétique de faible champ coercitif et de forte perméabilité, tel que le NiFe ou le CoTaZr.

La disposition des écrans magnétiques adjacents et dans le même plan que les éléments magnétorésistifs permet d'éliminer les composantes négatives parasites (undershoot) qui apparaissent lorsque les transitions arrivent aux bords extérieurs des éléments magnétorésistifs, en canalisant le flux magnétique issu de la transition. On les appelle donc "écrans de canalisation".

Les écrans de canalisation ne recouvrant pas les éléments magnétorésistifs et se trouvant dans le même plan horizontal, ils ne modifient pas la distance entre les éléments magnétorésistifs et le support d'information, et influent peu sur la distribution du flux magnétique lorsqu'une transition est centrée entre les deux éléments magnétorésistifs. En conséquence, ils ne contribuent à aucune diminution de l'amplitude du signal de sortie des éléments magnétorésistifs.

Cette géométrie permet donc d'obtenir une forte amplitude du signal de sortie en minimisant les contributions négatives parasites.

Conformément à une autre caractéristique de l'invention, les éléments magnéto-résistifs sont constitués d'une structure de type "vanne de spin" telle que décrite dans le document US 5 159 513.

L'utilisation de structures de type vanne de spin permet des amplitudes de signal beaucoup plus élevées que dans les structures à magnétorésistance anisotrope (AMR) décrites dans les documents précités relatifs à des têtes magnétorésistives planaires avec deux éléments connectés en différentiel.

Selon une autre caractéristique de l'invention, l'élément magnéto-résistif peut comporter deux empilements tels que décrits précédemment, disposés tête-bêche, de manière à former une structure dite en double "vanne de spin", telle que décrite dans le document US 5 287 238. Une telle disposition permet d'augmenter fortement le signal de sortie, sans engendrer de contrainte d'encombrement gênante dans la géométrie décrite ici.

Conformément à une autre caractéristique de l'invention, la couche de protection comporte :
◆ une couche isolante, présente au moins au dessus des deux éléments magnéto-résistifs,
◆ une couche tribologique, située au-dessus de la couche isolante, et présentant éventuellement une ouverture à l'aplomb des éléments magnéto-résistifs.

Ainsi, la couche isolante assure l'isolation électrique entre les deux éléments magnéto-résistifs et le support d'enregistrement, évitant ainsi tout risque de court-circuit. La couche tribologique assure, quant à elle, un contact avec le support d'informations engendrant le minimum de frottements et d'usure possible.

Conformément à une autre caractéristique de l'invention, l'écran magnétique de canalisation peut être intercalé entre la couche tribologique et la couche isolante.

Avantageusement en pratique, l'écran magnétique de canalisation est relié à la masse électrique de la tête de lecture, ce qui limite les risques de claquage électrique des éléments magnéto-résistifs.

Conformément à une autre caractéristique de l'invention, les couches minces conductrices formant les amenées de courant aux éléments magnéto-résistifs peuvent également inclure des éléments formant des aimants permanents destinés à minimiser le bruit de domaine dans les éléments magnéto-résistifs.

Bien que l'invention soit essentiellement décrite dans sa partie lecture, elle peut bien évidemment être associée avantageusement avec un organe d'écriture magnétique formée d'une tête inductive planaire, pour être notamment intégrée dans des dispositifs de stockage d'informations dans du matériel informatique.

### Description sommaire des figures

La manière de réaliser l'invention, ainsi que les avantages qui en découlent ressortiront bien de la description du mode de réalisation qui suit, donné à titre exemplatif et non limitatif, à l'appui des figures annexées, dans lesquelles :
La figure 1 est une vue en coupe de la tête de lecture, selon un plan perpendiculaire au support d'informations, et parallèle au sens de déplacement de la tête.
La figure 2 est une vue de dessus schématique de la partie lecture de la tête conforme à l'invention.
La figure 3 est une vue de détail de la coupe de la figure 1, montrée dans la zone des éléments magnéto-résistifs.
La figure 4 est une vue schématique de la structure d'un élément magnéto-résistif.
La figure 5 est une vue schématique d'une variante de réalisation d'un élément magnéto-résistif (double vanne de spin).
Les figures 6 à 10 et 12 sont des vues en coupe, dans le même plan que la figure 1, de la tête conforme à l'invention montrée à différents stades d'évolution de son procédé de fabrication.
Les figures 11 et 13 sont des vues de dessus de la tête, montrée au stade correspondant respectivement aux figures 10 et 12.

### Manière de réaliser l'invention

Comme déjà dit, l'invention concerne une tête magnétique (1) qui est destinée à être notamment utilisée dans des disques durs, disques souples ou autres bandes incorporées dans des matériels informatiques.

De façon générale, de telles têtes comprennent une partie lecture (2) et une partie écriture (3), bien que l'invention ne soit pas exclusivement limitée à une telle tête double fonction.

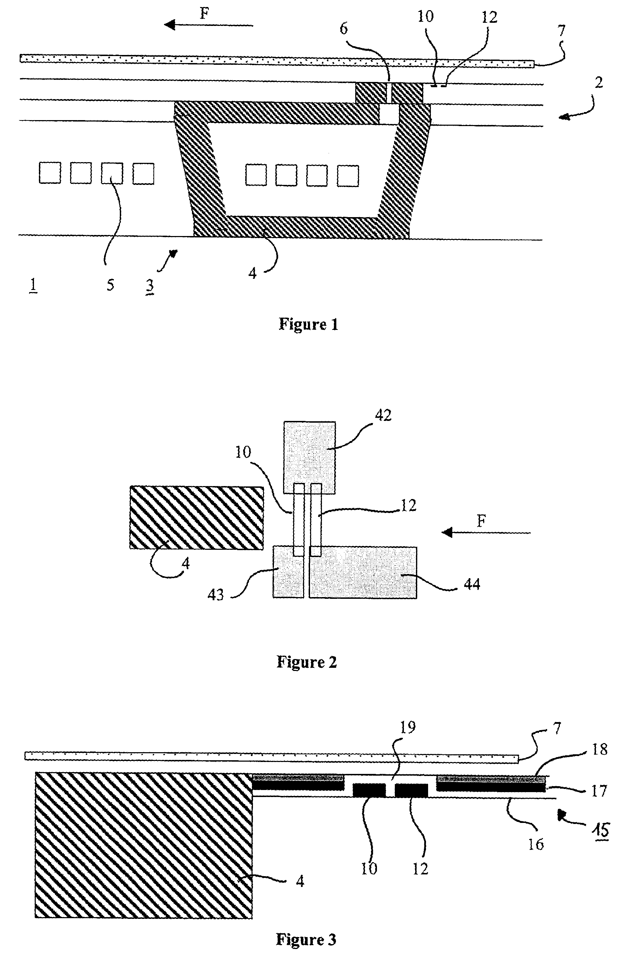

La figure 1 illustre une tête comportant des organes assurant les deux fonctions, mais qui ne seront pas détaillés plus avant pour ce qui concerne la fonction écriture. Néanmoins, on peut préciser que la partie écriture (3) d'une telle tête comprend un circuit magnétique (4) et un bobinage (5), qui, lorsqu'il est parcouru par un courant électrique, induit un champ magnétique dans le circuit magnétique (4). Au niveau de l'entrefer (6), le champ magnétique écrit sur le support d'informations en l'aimantant.

S'agissant de la partie lecture (2), la tête (1) comprend de façon essentielle deux éléments magnéto-résistifs (10, 12) sous forme de ruban, disposés parallèlement au support d'informations (7).

Ces deux rubans (10, 12) sont disposés parallèlement l'un à l'autre, et présentent leur grand côté perpendiculaire au sens de déplacement relatif du support d'informations par rapport à la tête, identifié sur les figures 1 et 2 par les flèches F.

Comme illustré à la figure 2, les éléments magnéto-résistifs (10, 12) ont une longueur, mesurée dans le plan perpendiculaire au sens (F) de déplacement relatif du support d'informations (7), qui est fonction de la largeur de la piste sur le support d'informations. Cette longueur est typiquement de l'ordre du micron, voire inférieure.

La largeur de chaque élément magnéto-résistif (10, 12), parallèlement au sens F de déplacement du support d'informations, est définie par la densité linéique d'informations sur le support d'enregistrement. En pratique, la largeur de chaque élément magnéto-résistif est de l'ordre de 20 à 200 nanomètres.

Comme illustré à la figure 3, les deux éléments magnéto-résistifs (10, 12) sont disposés parallèlement au plan de vol ou au plan du support d'informations (7), juste en dessous de la couche de protection (15), destinée à isoler électriquement les éléments magnétorésistifis.

Une telle couche de protection (15) est constituée, comme illustré à la figure 3, d'une couche d'isolant (16) réalisée par exemple en oxyde ou nitrure de silicium, ou en oxyde d'aluminium, qui a été déposée sur les deux éléments magnéto-résistifs (10, 12).

La couche de protection (15) peut être complétée par une couche tribologique (18) qui limite les phénomènes d'usure lorsque la tête vient au contact du support d'informations, d'épaisseur typiquement inférieure à 20 nanomètres, qui peut être par exemple constituée de carbone diamant ou de nitrure de silicium.

La couche tribologique (18) est complètée par une couche métallique et magnétique (17), par exemple du NiFe, qui fait office d'écran magnétique de canalisation pour éliminer les contributions négatives parasites du signal. En outre, cet écran de canalisation peut être relié à la masse électrique de la tête pour éviter les décharges électrostatiques qui pourraient affecter les éléments magnéto-résistifs (10, 12).

Ces couches tribologique et magnétique (17, 18) présentent une ouverture (19) au niveau des éléments magnéto-résistifs, qui permet de minimiser la distance entre les éléments magnétorésistifs et le support d'enregistrement et qui évite que le champ magnétique issu du support d'informations soit perturbé par la couche de protection (15).

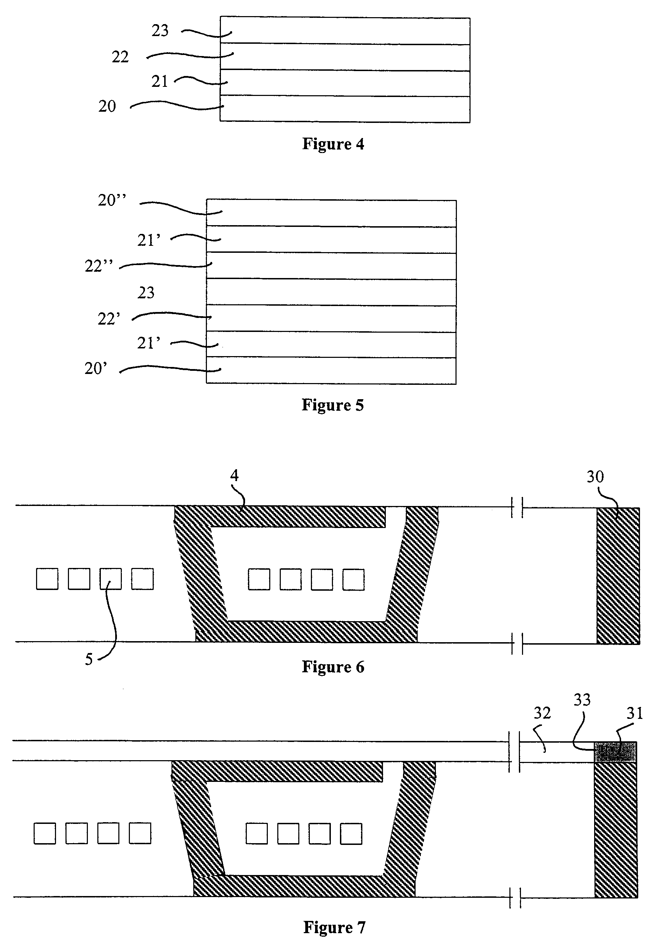

Selon une autre caractéristique de l'invention, les éléments magnéto-résistifs (10, 12) sont constitués de structures "vannes de spin" qui sont avantageusement réalisées par un empilement de différentes couches, comme illustré à la figure 4.

Cet empilement comprend au moins une couche magnétique (20) dite "couche de piégeage", généralement appelée selon la dénomination anglaise "pinning layer", qui peut être soit une couche magnétique à fort champ coercitif, par exemple en TbCo, soit avantageusement une couche antiferromagnétique, par exemple NiMn ou PtMn.

La couche magnétique de piégeage (20) est recouverte d'une couche magnétique de faible champ coercitif (21), couplée magnétiquement à la couche de piégeage (20). Cette couche (21) est généralement en NiFe, Co, CoFe ou un autre alliage ferromagnétique. Elle est appelée couche piégée.

L'aimantation de cette couche (21) reste rigide ou piégée pendant le fonctionnement de la tête, ici dans une direction parallèle au sens F de défilement du support d'information. Son épaisseur est typiquement de quelques nanomètres.

La couche magnétique (21) est recouverte d'une couche conductrice (22) non magnétique, généralement réalisée en cuivre, dont la fonction est de découpler magnétiquement les deux couches magnétiques (20, 21). Elle est appelée espaceur non magnétique. Son épaisseur est de quelques nanomètres.

La couche conductrice (22) est recouverte d'une couche magnétique de faible coercivité (23), réalisée généralement en NiFe, Co ou CoFe, appelée "couche libre". C'est elle qui va réagir au champ magnétique excitateur issu du support d'enregistrement.

Cette structure de vanne de spin peut être renversée, ou dupliquée comme illustré à la figure 5, dans laquelle la structure de la figure 4 se répète deux fois tête-bêche, pour constituer une double vanne de spin.

Dans cet exemple, les couches de piégeage, les couches piégées et les espaceurs non magnétiques (20', 21', 22') sont respectivement identiques aux couches (20", 21", 22"), la couche magnétique libre (23') étant commune aux deux structures.

Une telle structure de double vanne de spin permet d'augmenter fortement le signal de sortie, ce qui améliore la sensibilité de la tête de lecture.

Les figures 6 à 12 illustrent un mode pour la réalisation particulière d'une telle tête, qui doit être considéré comme un exemple de réalisation non limitatif d'un procédé de réalisation.

La partie écriture d'une telle tête peut être réalisée, conformément aux enseignements du brevet FR 2 769 399, de sorte qu'elle ne sera pas détaillée plus avant.

Ainsi, la tête illustrée à la figure 6, se trouvant dans un état intermédiaire, comprend l'essentiel du circuit magnétique (4) de la tête d'écriture (3) ainsi que le bobinage (5).

Les contacts (30) sont fabriqués en parallèle avec la tête de lecture, et sont destinés à amener le courant électrique aux éléments magnéto-résistifs qui sont réalisés ultérieurement.

Ces contacts (30) sont situés dans un plan différent du plan de symétrie de la tête d'écriture pour des raisons d'encombrement.

Par la suite, comme illustré à la figure 7, on réalise des plots de contact (31) pour les éléments magnéto-résistifs selon l'enchaînement des opérations suivantes :
◆ tout d'abord, dépôt d'une couche d'isolant (32), puis lithographie et gravure d'un caisson (33) dans ledit isolant (32) ;
◆ puis remplissage du caisson par dépôt d'une sous-couche, et électrolyse d'un métal conducteur pour former le plot (31) ;
◆ et enfin planarisation des dépassements du métal par rapport à la surface du plan de l'isolant (32) et ce sans consommation excessive de la couche d'isolant.

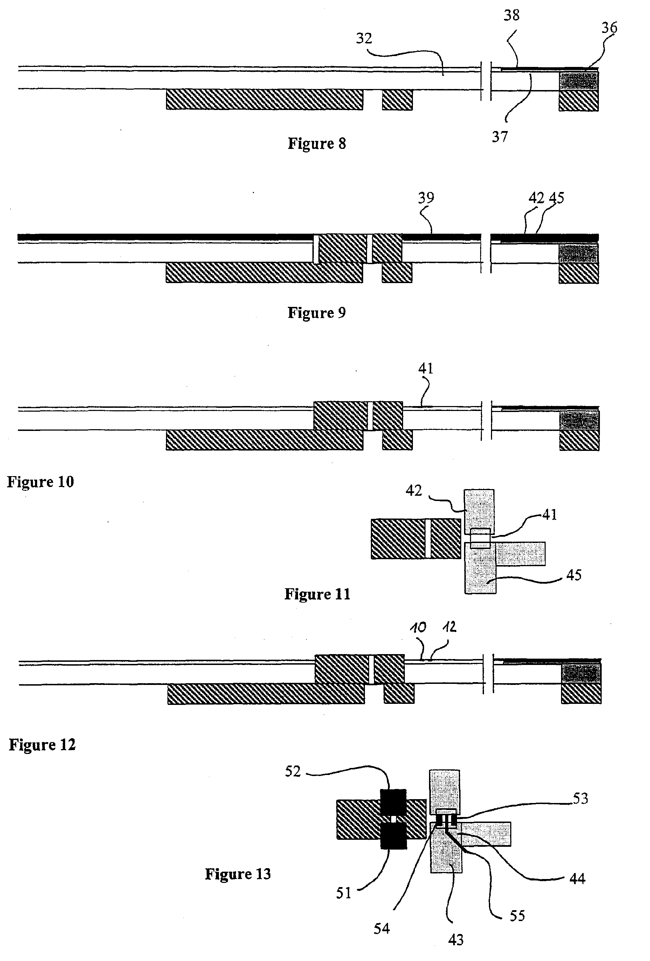

Par la suite, comme illustré à la figure 8 qui est une vue grossie de la partie supérieure de la tête, on réalise des plots fins, destinés à être au contact des éléments magnéto-résistifs par l'enchaînement des étapes suivantes :
◆ tout d'abord, on dépose un métal (37) sur la couche d'isolant,
◆ on dépose au-dessus de ce dépôt métallique (37) une couche d'arrêt (38),
◆ par lithographie et usinage ionique des couches métalliques et d'arrêt (37, 38), on définit les plots (42, 45) illustrés en vue de dessus à la figure 11,
◆ par la suite, on dépose un isolant et on le planarise au niveau de la couche d'arrêt (38).

Après la réalisation des pièces polaires du circuit d'écriture qui ne seront pas détaillées plus avant, on aboutit à la situation illustrée à la figure 9, dans laquelle la structure comporte une couche d'arrêt (39), disposée au-dessus des plots métalliques et des plots (42, 45).

Comme illustré à la figure 10, la réalisation du circuit de lecture se continue par tout d'abord, le retrait de la couche d'arrêt (39), puis le dépôt de la couche magnéto-résistive, et enfin une lithographie de cette couche magnéto-résistive qui définit un détourage (41).

Cette couche magnéto-résistive (41) disposée entre les deux plots (42, 45) est une couche unique, qui sera destinée à former les deux éléments magnéto-résistifs (10, 12) caractéristiques.

On conçoit que la mise en place d'une seule couche magnéto-résistive (41) qui comporte donc une seule et même orientation magnétique facilite grandement le procédé puisqu'il n'est pas nécessaire de déposer distinctement différentes couches magnéto-résistives présentant des orientations différentes. De plus, on s'assure ainsi que les éléments magnétorésistifs sont parfaitement identiques ce qui permet une mesure différentielle correcte.

On aboutit alors à la structure illustrée en vue de dessus à la figure 11, dans laquelle la couche magnéto-résistive (41) assure la jonction entre les deux plots métalliques (42, 45).

Par la suite, en fonction des caractéristiques dimensionnelles souhaitées pour les éléments magnéto-résistifs (10, 12), qui sont fonction de l'application souhaitée (largeur des pistes d'informations et densité linéique), on procède à la séparation des deux éléments magnéto-résistifs (10, 12) à partir de la couche magnéto-résistive (41).

Pour cela, on élimine par gravure au faisceau d'ions focalisés, une partie de la couche magnéto-résistive (41) pour donner à chaque élément magnéto-résistif (10, 12) la géométrie voulue, et on assure par le même moyen une découpe du plot (45) pour former les bornes de mesure (43, 44).

Les zones noircies (53) (54) et (55) de la figure 14 correspondent aux régions usinées par le faisceau d'ions focalisés pour la fabrication de l'élément de lecture. Les zones noircies (51) et (52) correspondent aux régions qui peuvent être également usinées par faisceau d'ions focalisés pour la mise aux dimensions finales des pièces polaires de la tête d'écriture.

Par la suite, la tête de lecture est terminée en déposant une couche d'isolant (16), puis une couche magnétique de canalisation du flux (17), puis une couche tribologique (18), qui est ensuite planarisée pour aboutir à la structure illustrée à la figure 3.

Bien entendu, d'autres variantes d'exécution pourraient être employées pour obtenir une structure conforme au principe de l'invention et le procédé décrit ci-avant ne constitue pas la seule solution technique possible.

Il ressort de ce qui précède que la tête de lecture conforme à l'invention présente de multiples avantages, et notamment :
◆ l'utilisation de la géométrie planaire permet de s'affranchir des étapes de polissage mécanique et des inconvénients qui y sont associés, à savoir les risques de corrosion et de mélange mécanique ("smearing" en anglais) de la structure vanne de spin notamment ;
◆ le signal de sortie issu de la tête est compatible avec les circuits électroniques existants, destinés à interfacer des têtes à géométrie verticale actuellement les plus répandues, et dont les inconvénients ont été précisés ci-avant ;
◆ la disposition des éléments magnéto-résistifs juste en dessous de la couche de protection, permet :
   - d'éliminer la présence d'une sonde magnétique dont le procédé de fabrication est particulièrement complexe ;
   - d'obtenir une amplitude élevée du signal de sortie des éléments magnétorésistifs élevée.
◆ l'absence de circuit magnétique de guidage du flux jusqu'aux éléments magnétorésistifs minimise très fortement les bruits de domaine et les pertes de flux magnétique ;
◆ la tête de lecture conforme à l'invention n'est pas sensible aux aspérités thermiques, puisque les faibles dimensions latérales de chaque élément magnéto-résistif conduisent à un échauffement lié aux chocs avec le support d'enregistrement qui est identique pour les deux éléments. Le signal de sortie étant constitué de la différence des signaux individuels des deux éléments, la contribution des aspérités thermiques est donc nulle ;
◆ de par l'orientation des éléments magnéto-résistifs, il est possible d'utiliser des structures "vanne de spin" dont l'épaisseur peut être variée sans interférer avec d'autres éléments, comme des écrans magnétiques. On peut donc ainsi optimiser la structure de l'élément magnéto-résistif concernant notamment l'amplitude de la variation de sa résistance électrique et sa stabilité thermique et électrique, sans imposer de contrainte sur le reste des organes de la tête ;
◆ La présence d'écrans magnétiques de canalisation adjacents aux éléments magnétorésistifs et dans le même plan que ceux-ci permet d'éliminer les contributions négatives parasites du signal de sortie (undershoot) sans affecter significativement l'amplitude du signal de sortie.
◆ La couche tribologique de protection contre l'usure peut inclure l'écran magnétique de canalisation, lequel peut être mis à la masse électrique pour minimiser les risques de claquage électrostatique des éléments magnétorésistifs.

## Revendications

1. Tête de lecture magnétique (1), destinée à lire des informations enregistrées sur un support d'informations (7) qui est déplacé dans un plan de vol au-dessus ou au-dessous de la tête, ladite tête comportant :
◆ une couche de protection (15) apte à protéger la tête contre l'usure liée aux frottements avec le support d'informations (7),
◆ deux éléments magnéto-résistifs (10, 12) en forme de ruban ,disposés côte à côte sans contact, parallèlement au plan de vol et en dessous de la couche de protection (15); les deux éléments magnéto-résistifs (10, 12) étant magnétiquement orientés dans le même sens, parallèlement au plan de vol;
et dans laquelle deux des extrémités des éléments magnéto-résistifs (10, 12) sont électriquement reliés pour former une borne de mesure commune (42), les autres extrémités desdits éléments magnéto-résistifs (10, 12) formant chacune une borne de mesure supplémentaire (43, 44), permettant la mesure différentielle des signaux relatifs à chacun des éléments magnétos-résistifs (10, 12),
caractérisée en ce qu'elle comporte également un écran magnétique de canalisation (17), adjacent aux éléments magnétorésistifs (10,12) et situé dans le même plan horizontal que ces derniers, ledit écran présentant une ouverture à l'intérieur de laquelle sont logés les éléments magnétorésistifs (10,12), ledit écran étant isolé électriquement des éléments magnétorésistifs (10,12).

2. Tête selon la revendication 1 caractérisée en ce que les éléments magnétorésisitifs sont du type "vanne de spin" et qu'ils sont orientés magnétiquement perpendiculairement au sens de déplacement au-dessus du support d'informations (7).

3. Tête selon la revendication 1, caractérisée en ce que la couche de protection (15) comporte :
◆ une couche isolante (16) présente au moins en dessus des deux éléments magnéto-résistifs (10, 12) ;
◆ une couche tribologique (18), située au dessus de la couche isolante (16), et présentant une ouverture (19) à l'aplomb des éléments magnéto-résistifs (10,12) ;

4. Tête selon les revendications 3 et 2, caractérisée en ce que l'écran magnétique de canalisation est intercalé entre la couche tribologique (18) et la couche isolante (16)

5. Tête selon la revendication 4 caractérisée en ce que l'écran magnétique de canalisation (17) est relié à la masse électrique de la tête de lecture (1).

6. Tête selon la revendication 1, caractérisée en ce que les couches conductrices formant les bornes de mesure (42,43,44) comprennent des éléments formant des aimants permanents destinés à minimiser le bruit de domaines dans les éléments magnéto-résistifs.

7. Tête selon la revendication 1, caractérisée en ce que la distance entre les éléments magnéto-résistifs (10, 12) est comprise entre 5 et 100 nanomètres.

8. Tête de lecture selon l'une des revendications 1 à 7, caractérisée en ce qu'elle est associée avec un organe d'écriture magnétique (3) formé d'une tête inductive planaire.

9. Tête de lecture selon les revendications 1 à 8 caractérisée en ce qu'elle est utilisée dans les systèmes de stockage de l'information de type disque dur, disque souple ou bande.
